# EUROPÄISCHE PATENTSCHRIFT

(11) **EP 3 446 300 B1**
(45) Veröffentlichungstag und Bekanntmachung des Hinweises auf die Patenterteilung: **16.12.2020**
(21) Anmeldenummer: 17730076.1
(22) Anmeldetag: 30.05.2017
(51) Int. Cl.: G08G 1/00, G08G 1/0967, G08G 1/0968, G01C 21/34

(54) **ASSISTENZSYSTEM UND VERFAHREN ZUR ÜBERTRAGUNG VON DATEN BEZÜGLICH EINES UNFALLS ODER EINER PANNE EINES FAHRZEUGS**
ASSISTANCE SYSTEM AND METHOD FOR TRANSFERRING DATA REGARDING AN ACCIDENT OR A BREAKDOWN OF A VEHICLE
SYSTÈME D'ASSISTANCE ET PROCÉDÉ DE TRANSMISSION DE DONNÉES CONCERNANT UN ACCIDENT OU UNE PANNE D'UN VÉHICULE

(30) Priorität: 31.05.2016 DE 102016006687
(43) Veröffentlichungstag der Anmeldung: 27.02.2019
(73) Patentinhaber: Audi AG, 85045 Ingolstadt (DE)
(72) Erfinder: SCHWENSFEIER, Florian, 86697 Oberhausen (DE)
(86) Internationale Anmeldenummer: PCT/EP2017/063053
(87) Internationale Veröffentlichungsnummer: WO 2017/207579

(56) Entgegenhaltungen:
- WO-A1-2015/170990
- DE-C1- 10 007 573
- US-A1- 2001 014 849
- US-A1- 2010 194 558
- US-A1- 2013 222 133
- US-A1- 2013 281 141
- US-A1- 2016 061 625

## Beschreibung

Die vorliegende Erfindung betrifft ein Assistenzsystem und ein Verfahren zur Übertragung von Daten bezüglich eines Unfalls oder einer Panne eines Fahrzeugs. Des Weiteren betrifft die vorliegende Erfindung ein Fahrzeug, das die übertragenen Daten empfangen kann.

Aus dem Stand der Technik sind fahrzeugseitige "Notrufsysteme" bekannt, mit denen bei oder nach einem Unfall oder einer Panne eines Fahrzeugs automatisch oder nach Betätigung einer hierfür vorgesehenen Betätigungseinrichtung über ein öffentliches Mobilfunknetz (etwa nach dem 3G- oder 4G-Mobilfunkstandard) ein Notruf zu einer Notrufzentrale (Leitzentrale, Meldestelle) übermittelt wird. Hierdurch kann die Zeitspanne zwischen dem Eintritt des Unfalls oder der Panne und dem Einleiten geeigneter Rettungs- bzw. Hilfsmaßnahmen in vorteilhafter Weise verkürzt werden.

So beschreibt etwa die DE 38 39 959 A1 eine Notrufeinrichtung für ein Fahrzeug, die beim Auftreten einer Gefahr, eines Unfalls oder einer Panne insbesondere einen automatischen Notruf sendet, der in einer Meldestation in Klarschrift lesbar oder über Lautsprecher ausgebbar ist. Mit dem Notruf können auch die Fahrzeugposition, die Zahl der in dem Fahrzeug befindlichen Personen, fahrzeugspezifische Daten, wie etwa die Gefahrenklasse, und Daten bezüglich des Unfallhergangs übermittelt werden. Aufgrund der mit dem Notruf übermittelten Daten kann die Meldestation erste zielführende Maßnahmen einleiten.

Die DE 10 2006 031 240 A1 hat ein Notrufsystem für ein Fahrzeug zum Gegenstand, wobei das Notrufsystem mindestens eine Sensorik, welche unfallrelevante Daten erfasst, eine Auswerte- und Steuereinheit, welche durch Auswerten von Signalen der mindestens einen Sensorik Art und Ausmaß von Verletzungen von Personen abschätzt, und eine Kommunikationseinheit, welche automatisch einen Notruf absetzt, umfasst. Die Auswerte- und Steuereinheit führt eine individuelle Berechnung der Verletzungsschwere für jeden der Insassen und/oder für einen betroffenen Fußgänger und/oder Zweiradfahrer durch und trifft in Abhängigkeit von der berechneten individuellen Verletzungsschwere für jede Person eine Dispositionsentscheidung zur Anforderung eines Rettungsdienstes über die Kommunikationseinheit. Bei einem derart ausgestalteten Notrufsystem ist keine umfangreiche Übertragung von Daten zu einer Meldestation und keine Bewertung der übertragenen Daten in der Meldestation erforderlich.

Neben dem "gezielten" Aussenden eines Notrufs zu einer Notrufzentrale unter Verwendung eines öffentlichen Mobilfunknetzes, etwa unter Verwendung eines fahrzeugseitigen Mobiltelefons oder Autotelefons und Anwahl einer der Notrufzentrale zugeordneten Telefonnummer, können von einem Fahrzeug auch Daten im Wege einer sog. Fahrzeug-zu-Fahrzeug-Kommunikation oder Fahrzeug-zu-Infrastruktur (gemeinsam oftmals verallgemeinernd als Fahrzeug-zu-X-Kommunikation bezeichnet) ausgesandt und empfangen werden, sofern das Fahrzeug mit einem entsprechenden Sendeempfänger mit einer Kurzstrecken-Kommunikationstechnik ausgestattet ist.

So beschreibt etwa die DE 20 2012 000 823 U1 ein mobiles Stauwarnsystem für Kraftfahrzeuge zur Meldung und Darstellung eines Staus, eines Notrufs, einer Unfallstelle oder anderer Verkehrsstörungen, Mitteilungen der BOS (Behörden und Organisationen mit Sicherheitsaufgaben), sowie als Hilfssystem bei Fahrten unter erschwerten Bedingungen. Ein Sendeempfänger empfängt Datentelegramme über eine Antenne aus dem Funkverkehr von anderen Verkehrsteilnehmern; die empfangenen Daten werden je nach Betriebsart durch eine Auswerteelektronik auswertet und eine entsprechende Reaktion des Systems bzw. optische und/oder akustische Signalisierungen auf einem Navigationsgerät durchführt. Des Weiteren werden eigen generierte und als Datentelegramm zusammengestellte Daten als allgemeine Standard-Aussendung (Broadcast) und entsprechende anhängende Sondermitteilungen, bspw. Notfallkennungen, über den Sendeempfänger und die Antenne ausgestrahlt.

Dokument US 2001/014849 A1 beschreibt ein Navigationssystem mit einer Routenführungs-Update-Funktion. Das Navigationssystem ist u.a. dazu eingerichtet, ein "beacon signal" auszusenden, wenn sich das Fahrzeug, in dem das Navigationssystem angeordnet ist, an einer Position oder in einem Zustand befindet, die/der eine mögliche Verkehrsgefährdung für andere Fahrer darstellt. Das "beacon signal" kann eine Positions-Information zur Verfügung stellen und kann auch Informationen bezüglich der Natur des Zustands des Fahrzeugs umfassen.

Es ist Aufgabe der vorliegenden Erfindung, die aus dem Stand der Technik bekannten Vorrichtungen und Verfahren bezüglich der Aussendung und der Verarbeitung von "Notrufen" aufgrund eines Unfalls oder einer Panne eines Fahrzeugs derart in neuartiger und erfinderischer Weise weiterzuentwickeln, dass damit Vorteile erzielbar sind, die mit den aus dem Stand der Technik bekannten Lösungen nicht erzielbar sind.

Diese Aufgabe wird vorrichtungstechnisch gelöst durch das Assistenzsystem gemäß Anspruch 1 sowie verfahrenstechnisch durch das Verfahren gemäß Anspruch 5. Vorteilhafte Weiterbildungen der Erfindung sind Gegenstand der Unteransprüche.

Die vorliegende Erfindung geht aus von einem gattungsgemäßen Assistenzsystem für ein erstes Fahrzeug, das eine Erfassungseinrichtung zum Erfassen von unfall- und/oder pannenrelevanten Daten von wenigstens einer fahrzeugseitigen Einrichtung, eine Positionsbestimmungseinrichtung zur Bestimmung der aktuellen Position des ersten Fahrzeugs, eine Auswertungseinrichtung zum Auswerten von von der Erfassungs- und der Positionsbestimmungseinrichtung erfassten Daten, und eine Kommunikationseinrichtung zum Aussenden von Daten mithilfe von Funksignalen aufweist.

Die Auswertungseinrichtung des erfindungsgemäßen Assistenzsystems ist dazu eingerichtet, mittels der Kommunikationseinrichtung mithilfe von Funksignalen automatisch oder nach Betätigung einer hierfür vorgesehenen fahrzeugseitigen Betätigungseinrichtung Daten bezüglich eines Gebiets um die aktuelle Position des ersten Fahrzeugs, das von anderen Verkehrsteilnehmern gemieden werden soll, auszusenden, falls von der Auswertungseinrichtung aufgrund der Auswertung der von ihr erfassten Daten festgestellt wurde, dass das erste Fahrzeug einen Unfall erlitten hat oder dass bei dem ersten Fahrzeug eine Panne aufgetreten ist.

Durch das Assistenzsystem können andere Verkehrsteilnehmer, insbesondere andere Fahrzeuge, aber auch Notrufzentralen, Behörden mit Sicherheitsaufgaben (BOS), etc. in an sich möglicherweise bereits bekannter Weise unmittelbar und verzögerungsfrei über einen Unfall oder eine Panne eines ersten Fahrzeugs informiert werden. Darüber hinaus erhalten Verkehrsteilnehmer, insbesondere "unbeteiligte" Verkehrsteilnehmer, d.h. solche, die nicht einer Behörde mit Sicherheitsaufgaben (BOS), oder Einsatz- und Rettungskräften zuzurechnen sind, auch eine Information dahin, welches Gebiet um das verunfallte erste Fahrzeug oder das aufgrund einer Panne liegengebliebene oder langsam fahrende erste Fahrzeug sie meiden sollen. Gerade letztere Information ist sehr wichtig, da hierdurch der Zugang zu der aktuellen Position, an der sich das verunfallte erste Fahrzeug oder das aufgrund einer Panne liegengebliebene oder langsam fahrende erste Fahrzeug befindet, für Land-, Luft- und Wasser-Fahrzeuge von BOS, Organisationen, die BOS ihre Land-, Luft- und Wasser-Fahrzeuge zur Verfügung stellen, und/oder allgemein von Einsatz- und Rettungskräften (möglichst) frei gehalten oder zugänglich gemacht werden kann.

Gemäß einer ersten vorteilhaften Weiterbildung des erfindungsgemäßen Assistenzsystems ist die Auswertungseinrichtung dazu eingerichtet, Daten des Gebiets um die aktuelle Position des ersten Fahrzeugs, das von anderen Verkehrsteilnehmern gemieden werden soll,
- unter Verwendung von Fahrzeug-zu-X-Kommunikation zu anderen Verkehrsteilnehmern und/oder
- zu einer fahrzeugexternen, stationären Datenverarbeitungseinrichtung, die wenigstens dazu eingerichtet ist, Verkehrsteilnehmern online aktuelle Verkehrsdaten und/oder eine dynamische Navigationsroutenberechnung zur Verfügung zu stellen,
auszusenden.

Bei dem Assistenzsystem ist die Auswertungseinrichtung dazu eingerichtet, die Größe des Gebiets um die aktuelle Position des ersten Fahrzeugs, das von anderen Verkehrsteilnehmern gemieden werden soll, unter Berücksichtigung der Schwere des Unfalls, der Art der Panne und/oder der Gefahrenklasse des ersten Fahrzeugs festzulegen.

Weiter ist vorgesehen, dass bei dem Assistenzsystem die Auswertungseinrichtung Zugriff auf digitale Straßendaten hat und dazu eingerichtet ist, die Größe des Gebiets um die aktuelle Position des ersten Fahrzeugs, das von anderen Verkehrsteilnehmern gemieden werden soll, unter Berücksichtigung des Straßentyps festzulegen, auf dem sich das erste Fahrzeug, das einen Unfall erlitten hat oder bei dem eine Panne aufgetreten ist, aktuell befindet. Gemäß noch einer weiteren vorteilhaften Weiterbildung kann das Assistenzsystem eine Kameraeinrichtung aufweisen, mit dem ein Umfeld des ersten Fahrzeugs erfasst werden kann, und kann die Auswertungseinrichtung dazu eingerichtet ist, die Größe des Gebiets um die aktuelle Position des ersten Fahrzeugs, das von anderen Verkehrsteilnehmern gemieden werden soll, unter Berücksichtigung des Anteils an Fahrspuren festzulegen, die durch den Unfall oder die Panne des ersten Fahrzeugs blockiert sind.

Weitere Vorteile ergeben sich, wenn das Assistenzsystem auch dazu eingerichtet ist, mittels der Kommunikationseinrichtung Daten bezüglich der aktuellen Position des ersten Fahrzeugs, sowie unfall- und/oder pannenrelevante Daten oder ein Auswertungsergebnis der Auswertungseinrichtung zu einer fahrzeugexternen, stationären Notrufzentrale auszusenden, falls von der Auswertungseinrichtung aufgrund der Auswertung der von ihr erfassten Daten festgestellt wurde, dass das erste Fahrzeug einen Unfall erlitten hat oder dass bei dem ersten Fahrzeug eine Panne aufgetreten ist.

Ein veranschaulichendes Beispiel betrifft auch ein zweites Fahrzeug mit einer Kommunikationseinrichtung zum Empfangen von Daten mithilfe von Funksignalen und einer Navigationseinrichtung mit digitalen Straßenkarten, das dadurch gekennzeichnet ist, dass die Kommunikationseinrichtung des zweiten Fahrzeugs dazu eingerichtet ist, Daten eines erfindungsgemäßen Assistenzsystems oder eines seiner vorteilhaften Weiterbildungen eines ersten Fahrzeugs und/oder Daten einer fahrzeugexternen, stationären Datenverarbeitungseinrichtung, die wenigstens dazu eingerichtet ist, Verkehrsteilnehmern online aktuelle Verkehrsdaten und/oder eine dynamische Navigationsroutenberechnung zur Verfügung zu stellen, empfangen zu können, und die Navigationseinrichtung dazu eingerichtet ist,
- aufgrund der von einem Assistenzsystem eines ersten Fahrzeugs und/oder einer fahrzeugexternen, stationären Datenverarbeitungseinrichtung empfangenen Daten, das Gebiet, das von anderen Verkehrsteilnehmern gemieden werden soll, auf einer fahrzeugseitigen Anzeigeeinrichtung anzuzeigen und/oder eine Route zu berechnen, mithilfe derer das zweite Fahrzeug das zu meidende Gebiet verlässt oder vermeidet, und/oder
- eine von einer fahrzeugexternen, stationären Datenverarbeitungseinrichtung empfangene und von dieser aufgrund der von einem Assistenzsystem eines ersten Fahrzeugs an die Datenverarbeitungseinrichtung übertragenen Daten für das zweite Fahrzeug berechnete Route zu übernehmen, mithilfe derer das zweite Fahrzeug das zu meidende Gebiet verlässt oder vermeidet.

Das zweite Fahrzeug kann in vorteilhafter Weise ein autonom oder automatisch gesteuertes Fahrzeug und dazu eingerichtet sein, das Gebiet, das von anderen Verkehrsteilnehmern gemieden werden soll, autonom oder automatisch gesteuert zu verlassen oder zu vermeiden.

Von der vorliegenden Erfindung umfasst ist auch ein Verfahren zur Übertragung von Daten bezüglich eines Unfalls oder einer Panne eines Fahrzeugs von dem Fahrzeug zu anderen Verkehrsteilnehmern und/oder einer fahrzeugexternen, stationären Datenverarbeitungseinrichtung, umfassend die Schritte gemäß Anspruch 5.

Das erfindungsgemäße Verfahren kann weiter den Schritt des Aussendens von Daten bezüglich der aktuellen Position des Fahrzeugs sowie von unfall- und/oder pannenrelevante Daten von wenigstens einer fahrzeugseitigen Einrichtung oder von einem Auswertungsergebnis der fahrzeugseitigen Auswertungseinrichtung mittels der fahrzeugseitigen Kommunikationseinrichtung mithilfe von Funksignalen zu einer fahrzeugexternen, stationären Notrufzentrale umfassen, falls von der Auswertungseinrichtung aufgrund der Auswertung der von ihr erfassten Daten festgestellt wurde, dass das Fahrzeug einen Unfall erlitten hat oder dass bei dem Fahrzeug eine Panne aufgetreten ist. Die vorliegende Erfindung wird anhand der beigefügten Zeichnungen näher erläutert.

Dabei zeigen:
- Fig. 1: eine schematische und beispielhafte Abbildung eines Assistenzsystems eines Fahrzeugs gemäß der vorliegenden Erfindung;
- Fig. 2: eine schematische und beispielhafte Abbildung eines zweiten Fahrzeugs gemäß der vorliegenden Erfindung.

Die Darstellungen in den Figuren sind rein schematisch und nicht maßstabsgerecht. Innerhalb der Figuren sind gleiche oder ähnliche Elemente mit gleichen Bezugszeichen versehen.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

Die in der obigen Beschreibung genannten Merkmale und Merkmalskombinationen sowie die in der nachfolgenden Beschreibung von Ausführungsformen, Ausführungsbeispielen und der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, sofern sie nicht den Rahmen der vorliegenden Erfindung, der durch die Ansprüche bestimmt ist, verlassen.

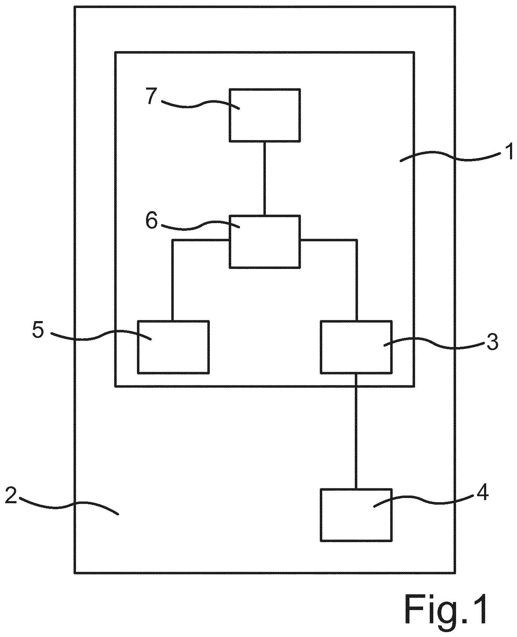

Wie in Fig. 1 rein schematisch und beispielhaft dargestellt ist, weist ein erfindungsgemäßes Assistenzsystem 1 für ein erstes Fahrzeug 2 eine Erfassungseinrichtung 3 zum Erfassen von unfall- und/oder pannenrelevanten Daten von wenigstens einer fahrzeugseitigen Einrichtung 4, eine Positionsbestimmungseinrichtung 5 zur Bestimmung der aktuellen Position des ersten Fahrzeugs 2, eine Auswertungseinrichtung 6 zum Auswerten von von der Erfassungs- 3 und der Positionsbestimmungseinrichtung 5 erfassten Daten, und eine Kommunikationseinrichtung 7 zum Aussenden von Daten mithilfe von Funksignalen auf.

Bezüglich der technischen Ausgestaltung des in dieser Anmeldung beschriebenen Systems 1 sowie der in dieser Anmeldung erwähnten Einrichtungen 3, 4, 5, 6, 7, 7' 9, 10, 11, 12 bestehen keine besonderen Einschränkungen und es können für die vorliegende Erfindung alle Systeme, Einrichtungen, etc. verwendet werden, die einem Fachmann für den jeweils genannten Zweck als tauglich bekannt sind. Auch in Bezug auf das erforderliche oder vorteilhafte Zusammenwirken, insbesondere die (drahtlose, drahtgebundene, mithilfe eines Bussystems) Kommunikation und den Datenaustausch zwischen den Einrichtungen können alle aus dem Stand der Technik bekannten Lösungen für die vorliegende Erfindung verwendet werden, die einem Fachmann für den jeweils genannten Zweck als tauglich bekannt sind.

Bei der Erfassungseinrichtung 3, der Positionsbestimmungseinrichtung 5, der Auswertungseinrichtung 6 und der Kommunikationseinrichtung 7 kann es sich um fest bei dem ersten Fahrzeug 2 verbaute Einrichtungen handeln, es kann sich aber auch um eine oder mehrere mobile Einrichtungen handeln. So können bspw. die genannten Einrichtungen bspw. alle Bestandteil eines mobilen Endgeräts sein, wie etwa eines Smartphones, eines PDA, eines Tablet-PCs, eines Netbooks, eines Notebooks, etc, wobei die Daten der wenigstens einen fahrzeugseitigen Einrichtung 4 zu dem mobilen Endgerät über eine entsprechende Kommunikationsschnittstelle (drahtlos, drahtgebunden, über ein Bussystem) übertragen werden.

Von der Erfassungseinrichtung 3 können die Signale und Daten von einer oder mehreren fahrzeugseitigen Einrichtungen 4 erfasst werden, insbesondere wenn diese Signale oder Daten zur Ermittlung eines Unfalls oder einer Panne dienen können. Als nicht abschließende Beispiele für derartige fahrzeugseitige Einrichtungen 4 seien hier erwähnt eine Airbag-Auslöseeinrichtung, Gurtstraffer-Auslöseeinrichtung (allgemeiner ausgedrückt, Auslöseeinrichtungen von Insassenschutzeinrichtungen), Beschleunigungssensoren (zur Messung von Beschleunigungen in verschiedene Richtungen; Gierratensensoren, Wankratensensoren), Überrollsensoren, Sensoren zur Erfassung der Raddrehzahl, des Lenkwinkels, der Bremsenstellung, Fußgängerschutzeinrichtungen, Steuereinrichtungen für Motor, Getriebe, Fahrwerk, etc. (hier insbesondere deren Fehlermeldungen), Überwachungseinrichtungen (bspw. Temperatursensoren, Drucksensoren, Flüssigkeitssensoren, Sicherungen), etc.

Die Signale und Daten der wenigstens einen fahrzeugseitigen Einrichtung 4 können auf jedem geeigneten Weg zu der Erfassungseinrichtung 3 übertragen werden, bspw. drahtlos (etwa mittels eines kurzreichweitigen Funksignals, mittels Lichtsignalen), drahtgebunden oder über ein (oftmals in einem Fahrzeug ohnehin vorhandenes) Bussystem.

Bei der Auswertungseinrichtung 6 handelt es sich üblicherweise um eine digitale Recheneinrichtung mit einem darauf ablauffähig installierten Rechenprogramm, wobei das Rechenprogramm dazu eingerichtet ist, die von der Erfassungseinrichtung 3 erfassten Daten und Signale dahin auszuwerten, ob das erste Fahrzeug 2 einen Unfall erlitten hat oder ob bei dem ersten Fahrzeug 2 eine Panne vorliegt. Die Erfassungseinrichtung 3 und die Auswertungseinrichtung 6 können selbstverständlich als eine gemeinsame Einrichtung ausgebildet sein, bspw. als eine digitale Recheneinrichtung mit entsprechenden Schnittstellen für die Daten und Signale der wenigstens einen fahrzeugseitigen Einrichtung 4.

Die Auswertungseinrichtung 6 kann auch Bestandteil einer auch zu anderen Zwecken in einem Fahrzeug 2 vorhandenen Recheneinrichtung sein und/oder es kann das Rechenprogramm zur Auswertung der erfassten Daten der wenigstens einen fahrzeugseitigen Einrichtung 4 auch Bestandteil eines Rechenprogramms sein, mit dem noch weitere Funktionen des Fahrzeugs 2 gesteuert, geregelt und/oder überwacht werden.

Bei der Positionsbestimmungseinrichtung 5 kann es sich etwa um eine satellitengestützte Positionsbestimmungseinrichtung 5 handeln, mit der die Position eines Fahrzeugs 2 mittels der Bestimmung der Laufzeit von Signalen von vier oder mehr Navigationssatelliten eines globalen Navigationssatelliten-Systems (GNSS) bestimmt wird. Ergänzend oder alternativ hierzu kann die Positionsbestimmungseinrichtung 5 jedoch auch eine sein, mit der die Position des Fahrzeugs 2 mittels Mobilfunk oder WLAN bestimmt werden kann.

Bei einer Positionsbestimmung mittels Mobilfunk kann etwa das Cell-ID-Verfahren verwendet werden, bei dem die Position über die Funk-Zelle (Cell-ID) ermittelt wird, in der das Mobilfunkgerät eingebucht ist. Die erzielbare Genauigkeit hängt hierbei vom Radius der Zelle ab und kann in ländlichen Gebieten mit großen Funk-Zell-Radien nicht ausreichend sein. Eine Verbesserung der Genauigkeit bei einer Positionsbestimmung mittels Mobilfunk kann unter Berücksichtigung des TA-Parameters (TA = Timing Advance) erreicht werden oder bei Anwendung des EOTD-Verfahrens (EOTD = Enhanced Observed Time Difference), bei dem die Laufzeitunterschiede der Signale von mehreren Funk-Zellen gemessen und auf Basis der Laufzeitunterschiede die Position des Mobilfunkgeräts berechnet wird. Mittels eines EOTD-Verfahrens kann eine Genauigkeit von bis zu etwa 25 Metern erreicht werden.

Auch eine Positionsbestimmung mittels Erkennung von WLAN-Netzen (sog. Wi-Fi Positioning) ist aus dem Stand der Technik bekannt und kann für die vorliegende Erfindung verwendet werde. Hierzu werden WLAN-Netze (Hotspots) erfasst und mit digitalen Straßendaten abgeglichen. Aufgrund der von einem WLAN-Empfänger empfangenen WLAN-Netze kann somit die Position des WLAN-Empfängers (hier eines bei einem Fahrzeug 2 angeordneten WLAN-Empfängers) berechnet werden. Diese Methode eignet sich insbesondere in Gegenden mit einer hohen Dichte an WLAN-Netzen, da hier eine Genauigkeit von bis zu 20 Metern erreicht werden kann.

Von der vorliegenden Erfindung umfasst ist es auch, wenn die Positionsbestimmungseinrichtung 5 eine Position des ersten Fahrzeugs 2 mithilfe von zwei oder drei der oben erwähnten Grundprinzipien (GNSS, Mobilfunk, WLAN) ermittelt und die Ergebnisse der jeweiligen Positionsbestimmungen miteinander verglichen und gegebenenfalls eine Positionsbestimmung Gewichtung und/oder Fusion der jeweils erzielten Ergebnisse vorgenommen wird.

Die Kommunikationseinrichtung 7 kann eine sein, mittels der wenigstens durch sog. Fahrzeug-zu-X-Kommunikation Daten ausgesandt werden können. Für eine Kommunikation zwischen Fahrzeugen oder zwischen Fahrzeugen und anderen Einrichtungen über kurze Distanzen kommen bspw. sog. DSRC-Netze (DSRC = Dedicated Short Range Communication) auf Grundlage des Standards ETSI ITS G5 (ETSI = European Telecommunications Standards Institute) in Frage. Dieser Standard nutzt das 5,9-GHz-Frequenzband und ist eine Spielart des WLAN-Standards IEEE 802.11p, bei dem es sich wiederum um eine spezielle Version der WLAN-Norm IEEE 802.11a handelt, und der für den Datenaustausch zwischen Fahrzeugen optimiert wurde.

In Europa kommt zusätzlich das Geonetworking-Protokoll zum Einsatz. Geonetworking ist ein Network-Layer-Protokoll, das nicht auf IP aufsetzt, sich jedoch in IP-lnfrastrukturen einbinden lässt, und für kleine Netze ausgelegt ist, die sich beispielsweise bei der Kommunikation zwischen Fahrzeugen spontan bilden können.

Ähnliche Systeme wie die vorstehend für Europa beschriebenen werden bzw. sind auch in anderen Regionen der Erde für eine Fahrzeug-zu-X-Kommunikation entwickelt worden, wobei die verschiedenen Systeme derzeit jedoch nicht oder nur bedingt zueinander kompatibel sind.

Mittels DSRC und ITS G5 können Entfernungen von mehreren 100 Metern bis zu etwa einem Kilometer überbrückt werden. Soll erfindungsgemäß das Assistenzsystem 1 nur für eine Fahrzeug-zu-X-Kommunikation eingesetzt werden, so ist es ausreichend, wenn die Kommunikationseinrichtung 7 über eine entsprechende Kurzstrecken-Kommunikationstechnik verfügt.

Sollen jedoch mittels der Kommunikationseinrichtung 7 Daten zu einer fahrzeugexternen, stationären Datenverarbeitungseinrichtung 11 oder Notrufzentrale übermittelt werden, so ist es erforderlich, dass die Kommunikationseinrichtung 7 über eine Langstrecken-Kommunikationstechnik verfügt, bspw. über eine Sendeeinrichtung unter Verwendung eines 3G- oder 4G-Mobilfunkstandards.

Sollen mittels der Kommunikationseinrichtung 7 sowohl Daten mittels einer Fahrzeug-zu-X-Kommunikation als auch Daten zu einer zu einer fahrzeugexternen, stationären Datenverarbeitungseinrichtung 11 oder Notrufzentrale übermittelt werden, so ist vorzusehen, dass die Kommunikationseinrichtung 7 sowohl über eine entsprechende Kurzstrecken-Kommunikationstechnik als auch über eine entsprechende Langstrecken-Kommunikationstechnik verfügt.

Wird von der Auswertungseinrichtung 6 aufgrund der Auswertung der von ihr erfassten Daten festgestellt, dass das erste Fahrzeug 2 einen Unfall erlitten hat oder dass bei dem ersten Fahrzeug 2 eine Panne aufgetreten ist, so ist erfindungsgemäß vorgesehen, dass von der Auswertungseinrichtung 6 mittels der Kommunikationseinrichtung 7 automatisch oder nach Betätigung einer hierfür vorgesehenen fahrzeugseitigen Betätigungseinrichtung (etwa Betätigung eines hierfür vorgesehenen Schalters, Tasters, der Eingabe eines entsprechenden Sprachbefehls, der Durchführung einer entsprechenden Geste, etc. durch einen Insassen des ersten Fahrzeugs 2) Daten, die ein Gebiet um die aktuelle Position des ersten Fahrzeugs umfassen, ausgesandt werden, das von anderen Verkehrsteilnehmern gemieden werden soll. Diese Daten können nicht nur das zu meidende Gebiet, sondern auch die aktuelle Position des ersten Fahrzeugs 2 umfassen.

Hierzu ist selbstverständlich vorzusehen, dass die Auswertungseinrichtung 6 auf die Daten bezüglich der aktuellen Position des ersten Fahrzeugs 2 der Positionsbestimmungseinrichtung 5 Zugriff hat bzw. dass diese Daten von der Positionsbestimmungseinrichtung 5 an die Auswertungseinrichtung 6 übermittelt werden. Dies kann entweder über ein Frage-Antwort-Verfahren erfolgen oder es können die entsprechenden Positionsdaten kontinuierlich oder in diskreten Zeitabständen von der Positionsbestimmungseinrichtung 5 zu der Auswertungseinrichtung 6 übertragen werden.

In einem veranschaulichenden Beispiel kann die Größe des Gebiets um die aktuelle Position des ersten Fahrzeugs 2, das von anderen Verkehrsteilnehmern gemieden werden soll, in einem einfachen Fall pauschal vorab festgelegt sein, unabhängig davon um welchen Typ es sich bei dem ersten Fahrzeug 2 handelt und/oder ob bei dem ersten Fahrzeug 2 eine Panne vorliegt oder ob das erste Fahrzeug 2 einen Unfall erlitten hat.

In einem weiteren veranschaulichenden Beispiel kann die Größe des Gebiets kann aber auch in Abhängigkeit des Fahrzeugtyps (Motorrad, Personenkraftwagen, Bus, Lastkraftwagen, Schwertransporter, Kettenfahrzeug, Militärfahrzeug, etc.) vorab unterschiedlich groß festgelegt sein. Auch kann ergänzend oder alternativ hierzu die Größe des von anderen Verkehrsteilnehmern zu meidenden Gebiets in Abhängigkeit davon, ob es sich um einen Unfall oder eine Panne handelt, unterschiedlich groß gewählt sein (etwa kleiner im Falle einer Panne und größer im Falle eines Unfalls).

In einem weiteren veranschaulichenden Beispiel kann die Größe des Gebiets durch eine kreisförmige Fläche mit einem vorgebbaren Radius um die aktuelle Position des ersten Fahrzeugs 2 als Zentrum angegeben werden. Gemäß eines anderen Beispiels kann die Größe des Gebiets, das von anderen Verkehrsteilnehmern gemieden werden sollen, sich durch Straßenabschnitte ergeben, die für Rettungs- und/oder Hilfsmaßnahmen möglichst freizuhalten sind.

Gemäß der vorliegenden Erfindung ist vorgesehen, dass
- die Auswertungseinrichtung 6 dazu eingerichtet ist, die Größe des Gebiets um die aktuelle Position des ersten Fahrzeugs 2, das von anderen Verkehrsteilnehmern gemieden werden soll, unter Berücksichtigung der Schwere des Unfalls, der Art der Panne und/oder der Gefahrenklasse des ersten Fahrzeugs 2 festzulegen;
- die Auswertungseinrichtung 6 Zugriff auf digitale Straßendaten hat und dazu eingerichtet ist, die Größe des Gebiets um die aktuelle Position des ersten Fahrzeugs 2, das von anderen Verkehrsteilnehmern gemieden werden soll, unter Berücksichtigung des Straßentyps festzulegen, auf dem sich das erste Fahrzeug 2, das einen Unfall erlitten hat oder bei dem eine Panne aufgetreten ist, aktuell befindet.
   In einer Ausführungsform ist vorgesehen, dass
- das Assistenzsystem 1 eine Kameraeinrichtung aufweist, mit dem ein Umfeld des ersten Fahrzeugs 2 erfasst werden kann, und die Auswertungseinrichtung 6 dazu eingerichtet ist, die Größe des Gebiets um die aktuelle Position des ersten Fahrzeugs 2, das von anderen Verkehrsteilnehmern gemieden werden soll, unter Berücksichtigung des Anteils an Fahrspuren festzulegen, der durch den Unfall oder die Panne des ersten Fahrzeugs 2 blockiert ist.

So kann bspw. bei einer Straße mit nur einer Fahrspur in einer Richtung, der Blockierung einer Fahrspur durch einen normalen Personenkraftwagen 2 ein kleineres Gebiet angegeben werden, das von anderen Verkehrsteilnehmern gemieden werden soll, als im Falle eines Unfalls eines Fahrzeugs 2 auf der gleichen Straße, wenn es sich bei dem Fahrzeug 2 um eines mit geladenem Gefahrgut handelt. Oder es kann bspw. bei einem Unfall, bei dem ein großer Sach- und schwere Personenschäden eingetreten sind oder vermutet werden, vorteilhaft sein, ein größeres Gebiet anzugeben, das von anderen Verkehrsteilnehmern gemieden werden soll, als bei einem kleineren Unfall, bei dem nur ein mittlerer oder kleiner Sachschaden eingetreten ist oder vermutet wird.

Kameraeinrichtungen zur Erfassung einer Umgebung eines Fahrzeugs sind aus dem Stand der Technik bekannt und diese Kameraeinrichtungen können auch eine 360°-Erfassung der Umgebung des Fahrzeugs ermöglichen. Durch eine Erfassung der Bilder einer Kameraeinrichtung, insbesondere einer 360°-Kameraeinrichtung und Auswertung der erfassten Bilder mittels einer Bildauswertungssoftware kann erkannt werden, welcher Anteil an Fahrspuren durch einen Unfall oder eine Panne des ersten Fahrzeugs 2 blockiert sind.

Gemäß einem weiteren Aspekt der vorliegenden Erfindung ist vorgesehen, dass mittels der Kommunikationseinrichtung 7 auch Daten bezüglich der aktuellen Position des ersten Fahrzeugs 2, sowie unfall- und/oder pannenrelevante Daten oder ein Auswertungsergebnis der Auswertungseinrichtung 6 zu einer fahrzeugexternen, stationären Notrufzentrale ausgesandt werden, falls von der Auswertungseinrichtung 6 aufgrund der Auswertung der von ihr erfassten Daten festgestellt wurde, dass das erste Fahrzeug 2 einen Unfall erlitten hat oder dass bei dem ersten Fahrzeug eine Panne aufgetreten ist.

In einem solchen Fall können von der fahrzeugexternen, stationären Notrufzentrale entweder die unfall- und/oder pannenrelevante Daten ausgewertet werden und entsprechende zielführende Maßnahmen eingeleitet werden, etwa die Alarmierung von Hilfs- und Rettungskräften und/oder die Benachrichtigung von Abschlepp- oder Pannenhilfe-Fahrzeugen.

Was als unfall- und/oder pannenrelevante Daten übertragen wird, unterliegt keiner besonderen Beschränkung und diese Daten können neben Daten, die von der Erfassungseinrichtung 3 erfasst wurden daher bspw. auch das Kennzeichen, den Fahrzeugtyp, die Anzahl an Personen in dem ersten Fahrzeug 2, die Gefahrenklasse bei Massengut- oder Gefahrguttransportern oder die Rufnummer des ersten Fahrzeugs 2 enthalten.

Wird ein Auswertungsergebnis der Auswertungseinrichtung 6 übertragen, kann dieses nicht nur das reine Ergebnis des Auswertungsvorgangs beinhalten (etwa in dem Sinne: es liegt ein Unfall mit dieser oder jener Schwere vor, es liegt eine Panne aufgrund dieses oder jenes Defekts vor), sondern es kann von dem Assistenzsystem 1 auch bereits eine Anforderung zielführender Maßnahmen zu der Notrufzentrale übertragen werden, so dass von dort aus ohne weitere Auswertung und/oder Bewertung der übertragenen Daten automatisch zielführende Maßnahmen eingeleitet werden können.

Von der vorliegenden Erfindung umfasst ist auch, dass von dem Assistenzsystem 1 Daten in jedem Fall automatisch ausgesandt werden, insbesondere zu einer Notrufzentrale, sofern eine bestimmte, vorgebbare Schwere eines Unfalls (bspw. unter Auslösung eines Insassenschutzsystems wie etwa einem Airbag) erreicht oder überschritten wurde oder eines bestimmte Art von Panne (bspw. ein Brand) vorliegt.

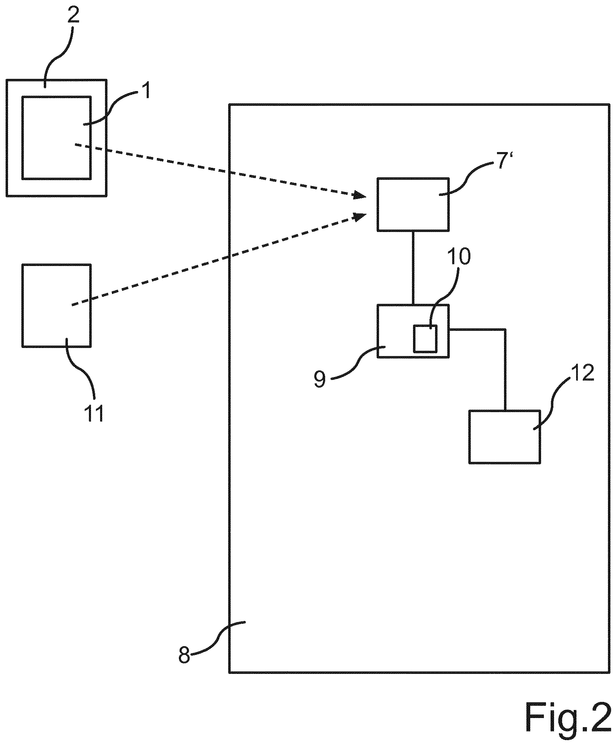

Die von dem ersten Fahrzeug 2 ausgesandten Daten bezüglich eines Gebiets, das von anderen Verkehrsteilnehmern gemieden werden soll, kann von einem beispielhaften, entsprechend ausgestatteten, zweiten Fahrzeug 8 (und selbstverständlich von mehreren entsprechend ausgestatteten, zweiten Fahrzeugen 8) empfangen werden. Hierzu weist das zweite Fahrzeug 8 eine Kommunikationseinrichtung 7' zum Empfangen von Daten mithilfe von Funksignalen und einer Navigationseinrichtung 9 mit digitalen Straßendaten 10 auf und ist die die Kommunikationseinrichtung 7' des zweiten Fahrzeugs 8 dazu eingerichtet ist, Daten eines erfindungsgemäßen Assistenzsystems 1 oder einer seiner vorteilhaften Weiterbildungen und Ausgestaltungen eines ersten Fahrzeugs 2 und/oder Daten einer fahrzeugexternen, stationären Datenverarbeitungseinrichtung 11, die wenigstens dazu eingerichtet ist, Verkehrsteilnehmern online aktuelle Verkehrsdaten und/oder eine dynamische Navigationsroutenberechnung zur Verfügung zu stellen, empfangen zu können (siehe Fig. 2; in Fig. 2 sind der Übersichtlichkeit halber die Elemente des Assistenzsystems 1 nicht zeichnerisch dargestellt; diesbezüglich wird auf Fig. 1 verwiesen).

Bei dem beispielhaften zweiten Fahrzeug 8 ist die Navigationseinrichtung 9 dazu eingerichtet,
- aufgrund der von einem Assistenzsystem 1 eines ersten Fahrzeugs 2 und/oder einer fahrzeugexternen, stationären Datenverarbeitungseinrichtung 11 empfangenen Daten, das Gebiet, das von anderen Verkehrsteilnehmern gemieden werden soll, auf einer fahrzeugseitigen Anzeigeeinrichtung 12 (etwa einem Display) anzuzeigen und/oder eine Route zu berechnen, mithilfe derer das zweite Fahrzeug 8 das zu meidende Gebiet verlässt oder vermeidet, und/oder
- eine von einer fahrzeugexternen, stationären Datenverarbeitungseinrichtung 11 empfangene und von dieser aufgrund der von dem Assistenzsystem 1 eines ersten Fahrzeugs 2 an die Datenverarbeitungseinrichtung 11 übertragenen Daten für das zweite Fahrzeug 8 berechnete Route zu übernehmen, mithilfe derer das zweite Fahrzeug 8 das zu meidende Gebiet verlässt oder vermeidet.

Bei beiden vorstehend erwähnten Option kann selbstverständlich weiter vorgesehen sein, dass auch eine akustische und/oder haptische Signalisierung des Empfangs der von einem Assistenzsystem 1 eines ersten Fahrzeugs 2 und/oder einer fahrzeugexternen, stationären Datenverarbeitungseinrichtung 11 empfangenen Daten in dem zweiten Fahrzeug 8 erfolgt, um einen Fahrer auf die potentielle Gefahrenstelle aufmerksam zu machen und ihn gegebenenfalls zu einer Änderung der befahrenen Route aufzufordern.

Handelt es sich bei dem zweiten Fahrzeug 8 um es ein autonom oder automatisch gesteuertes Fahrzeug 8 ist dieses in vorteilhafter Weise dazu eingerichtet, das Gebiet, das von anderen Verkehrsteilnehmern gemieden werden soll, autonom oder automatisch gesteuert zu verlassen oder zu vermeiden.

Bei der fahrzeugexternen, stationären Datenverarbeitungseinrichtung 11 kann es sich bspw. um einen, gegebenenfalls mit einem Netzwerk, wie dem Internet verbundenen Server oder eine Serverfarm handeln, mit einem oder mehreren digitalen Recheneinrichtungen, auf dem oder denen ein oder mehrere Rechenprogramme ablauffähig installiert sind und die wenigstens eine Speichereinrichtung aufweist oder darauf Zugriff hat, auf dem von der Datenverarbeitungseinrichtung 11 bspw. die von einem Assistenzsystem 1 ausgesandten Daten, wie etwa das von anderen Verkehrsteilnehmern zu meidende Gebiet (in einem einfachen Fall ein Gefahrenradius um die aktuelle Position des ersten Fahrzeugs 2) in einer Datenbank mit online Verkehrsdaten gespeichert werden. Informationen bezüglich zu meidender Gebiete können von der fahrzeugexternen, stationären Datenverarbeitungseinrichtung 11 anderen Verkehrsteilnehmern zur Verfügung gestellt werden und/oder zur (Neu)Berechnung von Routen verwendet werden, die teilnehmenden Fahrzeugen von der Datenverarbeitungseinrichtung 11 zur Verfügung gestellt werden.

Hierzu kann zwischen der Datenverarbeitungseinrichtung 11 und einem teilnehmenden Fahrzeug ein Datenaustausch vorgesehen sein, wobei das teilnehmende Fahrzeug seine aktuelle Position und Fahrtrichtung übermittelt. Hieraus kann von der Datenverarbeitungseinrichtung 11 festgestellt werden, ob sich das teilnehmende Fahrzeug auf einer Route oder Straße bewegt, die in einem von "anderen Verkehrsteilnehmern zu meidenden Gebiet" liegt oder in ein solches hineinführt, kann gegebenenfalls eine (Neu)Berechnung einer Routenführung vornehmen, derart, dass das teilnehmende Fahrzeug bei Befolgung der Route das zu meidende Gebiet verlässt oder dieses vermeidet und kann diese Route zu dem teilnehmenden Fahrzeug übertragen.

Die von einem Assistenzsystem 1 ausgesandten Daten bezüglich eines Unfalls oder einer Panne eines ersten Fahrzeugs 2 sowie bezüglich eines Gebiets, das von anderen Verkehrsteilnehmern gemieden werden soll, können mit einer zeitlich begrenzten Gültigkeit versehen sein, so dass diese Daten nach einer vorgebbaren Zeitspanne von sich aus ungültig werden und nach Ablauf der entsprechenden Zeitspanne Signalisierungen (Anzeigen, akustische und/oder haptische Signalisierungen) in zweiten Fahrzeugen 8 beendet werden, entsprechende Eintragungen in der Datenbank der Datenverarbeitungseinrichtung 11 gelöscht werden und Routenführungen gegebenenfalls neu berechnet werden.

Ebenso kann vorgesehen sein, dass die von dem Assistenzsystem 1 ausgesandten Daten in vorgebbaren Zeitabständen wiederholt ausgesandt werden müssen, damit der "Gefahrenzustand" gültig bleibt. Unterbleibt in diesem Fall die wiederholte Aussendung, wird davon ausgegangen, dass die "Gefahrenstelle" nicht länger existiert.

Weiter kann alternativ oder ergänzend zu den oben erwähnten Optionen vorgesehen sein, dass ein Benutzer des Fahrzeugs 2 mittels Betätigung einer entsprechenden fahrzeugseitigen Betätigungseinrichtung eine Ende des "Gefahrenzustands" über die Kommunikationseinrichtung 7 aussenden kann, und/oder dass eine entsprechende Aufhebung durch eine Einrichtung einer BOS, oder einer Einrichtung von Hilfs- oder Rettungskräften vorgenommen (bspw. ausgesandt) werden kann.

Der Begriff "Verkehrsteilnehmer", wie er in der vorliegenden Anmeldung verwendet wird, ist in keiner Weise einschränkend zu verstehen und kann andere Fahrzeuge (bspw. ein Fahrzeug 8), insbesondere Kraftfahrzeuge, aber auch Fußgänger, schienengebundene Fahrzeuge, Wasserfahrzeuge, etc. umfassen. Damit andere Verkehrsteilnehmer die Information bezüglich des ersten Fahrzeugs 2 erhalten können, ist es lediglich erforderlich, dass sie über ein entsprechend eingerichtetes Empfangsgerät verfügen. Bei diesem Empfangsgerät kann es sich auch um ein entsprechend eingerichtetes Mobiltelefon oder ein Smartphone handeln. Die Informationen bezüglich des ersten Fahrzeugs 2 können die anderen Verkehrsteilnehmer etwa mittels Fahrzeug-zu-X-Kommunikation (d.h. mittels Kurzstrecken-Kommunikation) direkt vom ersten Fahrzeug 2 empfangen oder über eine Aussendung (d.h. mittels Langstrecken-Kommunikation) durch die stationäre Datenverarbeitungseinrichtung 11.

Zusammenfassend kann man festhalten, das gemäß der vorliegenden Erfindung ein Pannen-/Unfallfahrzeug 2 über eine Fahrzeueigendiagnose einen kritischen Betriebszustand (bspw. Kurzschluss, kritische Temperaturüberschreitung, Verlust von Betriebsstoffen, Blockierung von Fahrspuren) erkennt und bei Feststellung eines solchen kritischen Betriebszustands (Panne, Unfall) wenigstens Daten über ein von anderen Verkehrsteilnehmern zu meidendes Gebiet mithilfe seiner Kommunikationseinrichtung 7 aussendet.

Diese Daten können bspw. mittels Fahrzeug-zu-X-Kommunikation von anderen Fahrzeugen 8 empfangen werden, so dass diese angebundene Verkehrsteilnehmer 8 aktiv über die Gefahrenstelle informiert werden. Bei autonom/automatisch fahrenden Fahrzeugen 8 kann in vorteilhafter Weise vorgesehen sein, das diese eigenständig das Gefahrengebiet verlassen oder meiden (sog. "No-Go Area").

Ebenfalls kann vorgesehen sein, dass die Gefahreninformationen inklusive des von anderen (insbesondere von "unbeteiligten", s.o.) Verkehrsteilnehmern (etwa einem oder mehreren zweiten Fahrzeugen 8) zu meidenden Gebiets in eine Datenbank mit online Verkehrsdaten einer fahrzeugexternen, stationären Datenverarbeitungseinrichtung 11 gespeichert und anderen Verkehrsteilnehmern online zur Verfügung gestellt werden (etwa mittels aktivem Push, Broadcasting, Frage-Antwort-Verfahren etc.). Wird von der Datenverarbeitungseinrichtung 11 für teilnehmende Fahrzeuge eine dynamische (online) Navigationsroutenberechnung durchgeführt, kann von der Datenverarbeitungseinrichtung 11 im Bedarfsfall auch die Routenführung für teilnehmende Fahrzeuge (etwa einem Fahrzeug 8) auf Basis der Gefahreninformationen zur Vermeidung der Gefahrenzone (neu) berechnet werden und das Ergebnis der (Neu)Berechnung zu teilnehmenden Fahrzeugen übertragen werden.

Des Weiteren kann auch vorgesehen sein, dass von dem ersten Fahrzeug 2 ein Notruf ausgelöst und an eine Notrufzentrale (Leitzentrale, Meldestelle) übermittelt wird. Dieser Notruf kann Zustandsdaten der Eigendiagnose enthalten. Von der Notrufzentrale kann gemäß einem Aspekt der vorliegenden Erfindung mittels Datenanalyse des Betriebszustands des ersten Fahrzeugs 2 das Gefahrenpotential berechnet oder abgeschätzt und die erforderlichen Rettungs- und/oder Hilfsmaßnahmen eingeleitet werden (bspw. Alarmierung der erforderlichen Rettungskräfte).

Durch die vorliegende Erfindung können Gefahren im Straßenverkehr schnelle umfänglich und korrekt eingeschätzt werden, können Rettungskräfte schneller entsendet und damit Gefahren eingedämmt und/oder beseitigt werden, können unbeteiligte Verkehrsteilnehmer aus einer Gefahrenzone ferngehalten werden und können prädiktive Verkehrsflussoptimierungen eingeleitet werden.

Die vorliegende Erfindung eignet sich für alle Arten von Fahrzeugen, insbesondere aber für Kraftfahrzeuge.

Da die für die vorliegende Erfindung erforderlichen Einrichtungen, Bauteile, Bauelement, Hard- und Software-Komponenten sowie deren mögliches, erforderliches oder vorteilhaftes Zusammenwirken einem Fachmann bekannt sind, braucht in der vorliegenden Anmeldung hierauf nicht weiter eingegangen zu werden.

## Patentansprüche

1. Assistenzsystem (1) für ein erstes Fahrzeug (2) aufweisend eine Erfassungseinrichtung (3) zum Erfassen von unfall- und/oder pannenrelevanten Daten von wenigstens einer fahrzeugseitigen Einrichtung (4), eine Positionsbestimmungseinrichtung (5) zur Bestimmung der aktuellen Position des ersten Fahrzeugs (2), eine Auswertungseinrichtung (6) zum Auswerten von von der Erfassungs- (3) und der Positionsbestimmungseinrichtung (5) erfassten Daten, und eine Kommunikationseinrichtung (7) zum Aussenden von Daten mithilfe von Funksignalen,
**dadurch gekennzeichnet dass**,
die Auswertungseinrichtung (6) dazu eingerichtet ist, mittels der Kommunikationseinrichtung (7) mithilfe von Funksignalen automatisch oder nach Betätigung einer hierfür vorgesehenen fahrzeugseitigen Betätigungseinrichtung Daten, die ein Gebiet um die aktuelle Position des ersten Fahrzeugs (2) umfassen,
das von anderen Verkehrsteilnehmern gemieden werden soll, damit der Zugang zu der aktuellen Position, an der sich das verunfallte erste Fahrzeug (2) oder das aufgrund einer Panne liegengebliebene oder langsam fahrende erste Fahrzeug (2) befindet, für Einsatz- und Rettungskräfte frei gehalten oder zugänglich gemacht werden kann, auszusenden, falls von der Auswertungseinrichtung (6) aufgrund der Auswertung der von ihr erfassten Daten festgestellt wurde, dass das erste Fahrzeug (2) einen Unfall erlitten hat oder dass bei dem ersten Fahrzeug (2) eine Panne aufgetreten ist,
wobei die Auswertungseinrichtung (6) Zugriff auf digitale Straßendaten hat und dazu eingerichtet ist, die Größe des Gebiets um die aktuelle Position des ersten Fahrzeugs (2), das von anderen Verkehrsteilnehmern gemieden werden soll, unter Berücksichtigung der Schwere des Unfalls, der Art der Panne und/oder der Gefahrenklasse des ersten Fahrzeugs (2) sowie unter Berücksichtigung des Straßentyps festzulegen, auf dem sich das erste Fahrzeug (2), das einen Unfall erlitten hat oder bei dem eine Panne aufgetreten ist, aktuell befindet.

2. Assistenzsystem (1) gemäß Anspruch 1,
**dadurch gekennzeichnet, dass**
die Auswertungseinrichtung (6) dazu eingerichtet ist, die Daten des Gebiets um die aktuelle Position des ersten Fahrzeugs (2), das von anderen Verkehrsteilnehmern gemieden werden soll,
- unter Verwendung von Fahrzeug-zu-X-Kommunikation zu anderen Verkehrsteilnehmern und/oder
- zu einer fahrzeugexternen, stationären Datenverarbeitungseinrichtung (11), die wenigstens dazu eingerichtet ist, Verkehrsteilnehmern online aktuelle Verkehrsdaten und/oder eine dynamische Navigationsroutenberechnung zur Verfügung zu stellen,
auszusenden.

3. Assistenzsystem (1) gemäß Anspruch 1 oder 2,
**dadurch gekennzeichnet, dass**
es eine Kameraeinrichtung aufweist, mit dem ein Umfeld des ersten Fahrzeugs (2) erfasst werden kann, und die Auswertungseinrichtung (6) dazu eingerichtet ist, die Größe des Gebiets um die aktuelle Position des ersten Fahrzeugs (2), das von anderen Verkehrsteilnehmern gemieden werden soll, unter Berücksichtigung des Anteils an Fahrspuren festzulegen, der durch den Unfall oder die Panne des ersten Fahrzeugs (2) blockiert ist.

4. Assistenzsystem (1) gemäß einem der vorhergehenden Ansprüche,
**dadurch gekennzeichnet dass**,
es dazu eingerichtet ist, mittels der Kommunikationseinrichtung (7) Daten bezüglich der aktuellen Position des ersten Fahrzeugs (2), sowie unfall- und/oder pannenrelevante Daten oder ein Auswertungsergebnis der Auswertungseinrichtung (6) zu einer fahrzeugexternen, stationären Notrufzentrale auszusenden, falls von der Auswertungseinrichtung (6) aufgrund der Auswertung der von ihr erfassten Daten festgestellt wurde, dass das erste Fahrzeug (2) einen Unfall erlitten hat oder dass bei dem ersten Fahrzeug eine Panne aufgetreten ist.

5. Verfahren zur Übertragung von Daten bezüglich eines Unfalls oder einer Panne eines ersten Fahrzeugs (2) von dem ersten Fahrzeug (2) zu anderen Verkehrsteilnehmern und/oder einer fahrzeugexternen, stationären Datenverarbeitungseinrichtung, umfassend die folgenden Schritte:
- Erfassen von unfall- und/oder pannenrelevanten Daten von wenigstens einer fahrzeugseitigen Einrichtung (4) mithilfe einer fahrzeugseitigen Erfassungseinrichtung (3);
- Bestimmten der aktuellen Position des ersten Fahrzeugs (2) mithilfe einer fahrzeugseitigen Positionsbestimmungseinrichtung (5);
- Auswerten von von der Erfassungs- und der Positionsbestimmungseinrichtung erfassten Daten mithilfe einer fahrzeugseitigen Auswertungseinrichtung (6); und
- automatisches oder nach Betätigung einer hierfür vorgesehenen fahrzeugseitigen Betätigungseinrichtung erfolgendes Aussenden von Daten, die ein Gebiet um die aktuelle Position des ersten Fahrzeugs (2) umfassen, das von anderen Verkehrsteilnehmern gemieden werden soll, damit der Zugang zu der aktuellen Position, an der sich das verunfallte erste Fahrzeug (2) oder das aufgrund einer Panne liegengebliebene oder langsam fahrende erste Fahrzeug (2) befindet, für Einsatz- und Rettungskräfte frei gehalten oder zugänglich gemacht werden kann, mittels einer fahrzeugseitigen Kommunikationseinrichtung (7) mithilfe von Funksignalen, falls von der Auswertungseinrichtung (6) aufgrund der Auswertung der von ihr erfassten Daten festgestellt wurde, dass das erste Fahrzeug (2) einen Unfall erlitten hat oder dass bei dem ersten Fahrzeug (2) eine Panne aufgetreten ist,
- wobei die Auswertungseinrichtung (6) auf digitale Straßendaten zugreift und die Größe des Gebiets um die aktuelle Position des ersten Fahrzeugs (2), das von anderen Verkehrsteilnehmern gemieden werden soll, unter Berücksichtigung der Schwere des Unfalls, der Art der Panne und/oder der Gefahrenklasse des ersten Fahrzeugs (2) sowie des Straßentyps festlegt, auf dem sich das erste Fahrzeug (2), das einen Unfall erlitten hat oder bei dem eine Panne aufgetreten ist, aktuell befindet.

6. Verfahren gemäß Anspruch 5, weiter umfassend den Schritt des
- Aussendens von Daten bezüglich der aktuellen Position des ersten Fahrzeugs (2) sowie von unfall- und/oder pannenrelevante Daten von wenigstens einer fahrzeugseitigen Einrichtung (4) oder von einem Auswertungsergebnis der fahrzeugseitigen Auswertungseinrichtung (6) mittels der fahrzeugseitigen Kommunikationseinrichtung (7) mithilfe von Funksignalen zu einer fahrzeugexternen, stationären Notrufzentrale, falls von der Auswertungseinrichtung aufgrund der Auswertung der von ihr erfassten Daten festgestellt wurde, dass das erste Fahrzeug (2) einen Unfall erlitten hat oder dass bei dem ersten Fahrzeug (2) eine Panne aufgetreten ist.

## Claims

1. Assistance system (1) for a first vehicle (2) having a data capture apparatus (3) for capturing accident and/or breakdown-related data from at least one vehicle-side apparatus (4), a position determining apparatus (5) for determining the current position of the first vehicle (2), an evaluation apparatus (6) for evaluating data captured by the data capture apparatus (3) and the position determining apparatus (5), and a communication apparatus (7) for broadcasting data by means of radio signals,
**characterised in that**
the evaluation apparatus (6) is designed to use the communication apparatus (7) to broadcast data with the aid of radio signals automatically or after actuation of a vehicle-side actuating apparatus provided for this purpose, which data encompass an area around the current position of the first vehicle (2), which should be avoided by other traffic participants, so that access to the current position, at which the first vehicle (2) in the accident or the first vehicle (2) that has had a breakdown or is moving slowly is located, is kept free or can be made accessible for emergency services and rescue workers, if it is determined by the evaluation apparatus (6), on the basis of the evaluation of the data recorded by the evaluation apparatus, that the first vehicle (2) has suffered an accident or that the first vehicle (2) has had a breakdown,
wherein the evaluation apparatus (6) has access to digital road data and is designed to determine the size of the area around the current position of the first vehicle (2) that should be avoided by other traffic participants, taking into account the severity of the accident, the type of breakdown and/or the hazard class of the first vehicle (2) and taking into account the type of road on which the first vehicle (2), which has suffered an accident or which has had a breakdown, is currently located.

2. Assistance system (1) according to claim 1,
**characterised in that**
the evaluation apparatus (6) is designed to broadcast the data of the area around the current position of the first vehicle (2) that other traffic participants are to avoid,
- and to broadcast this to other traffic participants using vehicle-to-X communication and/or
- to broadcast this to a stationary data processing apparatus (11) external to the vehicle, which is at least designed to provide traffic participants with online current traffic data and/or a dynamic navigation route calculation.

3. Assistance system (1) according to claim 1 or 2,
**characterised in that**
the system has a camera apparatus with which the surroundings of the first vehicle (2) can be recorded, and the evaluation apparatus (6) is designed to determine the size of the area around the current position of the first vehicle (2) that other traffic participants are to avoid, taking into account the proportion of lanes blocked by the accident or the breakdown of the first vehicle (2).

4. Assistance system (1) according to any one of the preceding claims,
**characterised in that**
the system is designed to use the communication apparatus (7) to broadcast data relating to the current position of the first vehicle (2), as well as accident and/or breakdown-related data or an evaluation result of the evaluation apparatus (6), to a stationary emergency call centre external to the vehicle, if it is determined by the evaluation apparatus (6), on the basis of the evaluation of the data recorded by the evaluation apparatus, that the first vehicle (2) has suffered an accident or that the first vehicle has had a breakdown.

5. Method for transmitting data, relating to an accident or a breakdown of a first vehicle (2), from the first vehicle (2) to other traffic participants and/or to a stationary data processing apparatus external to the vehicle, comprising the following steps:
- capturing of accident and/or breakdown-related data from at least one vehicle-side apparatus (4) with the aid of a vehicle-side data capture apparatus (3);
- determining the current position of the first vehicle (2) with the aid of a vehicle-side position determining apparatus (5);
- evaluation of data acquired by the data capture and position determining apparatus with the aid of a vehicle-side evaluation apparatus (6);
and
- broadcasting of data automatically or after actuation of a vehicle-side actuating apparatus provided for this purpose, said data encompassing an area around the current position of the first vehicle (2), which should be avoided by other traffic participants, so that access to the current position, at which the first vehicle (2) in the accident or the first vehicle (2) that has had a breakdown or is moving slowly is located, is kept free or can be made accessible for emergency services and rescue workers, said broadcasting taking place by means of a vehicle-side communication apparatus (7) with the aid of vehicle radio signals, if it is determined by the evaluation apparatus (6), on the basis of the evaluation of the data recorded by the evaluation apparatus, that the first vehicle (2) has suffered an accident or that the first vehicle (2) has had a breakdown,
- wherein the evaluation apparatus (6) accesses digital road data and specifies the size of the area around the current position of the first vehicle (2), which other traffic participants should avoid, taking into account the severity of the accident, the type of breakdown and/or the hazard class of the first vehicle (2) and the type of road on which the first vehicle (2), which has suffered an accident or which has had a breakdown, is currently located.

6. Method according to claim 5 further comprising the step of
- broadcasting data relating to the current position of the first vehicle (2) as well as accident and/or breakdown-related data, from at least one vehicle-side apparatus (4) or from an evaluation result of the vehicle-side evaluation apparatus (6), by means of the vehicle-side communication apparatus (7), with the aid of radio signals, to a stationary emergency call centre external to the vehicle, if it is determined by the evaluation apparatus, on the basis of the evaluation of the data recorded by the evaluation apparatus, that the first vehicle (2) has suffered an accident or that the first vehicle (2) has had a breakdown.

## Revendications

1. Système d'assistance (1) pour un premier véhicule (2) présentant un dispositif de détection (3) pour la détection de données relatives à un accident et/ou une panne d'au moins un dispositif côté véhicule (4), un dispositif de détermination de position (5) pour la détermination de la position actuelle du premier véhicule (2), un dispositif d'évaluation (6) pour l'évaluation de données détectées par le dispositif de détection (3) et le dispositif de détermination de position (5), et un dispositif de communication (7) pour l'émission de données à l'aide de signaux radio,
**caractérisé en ce**
**que** le dispositif d'évaluation (6) est configuré pour émettre, au moyen du dispositif de communication (7) à l'aide de signaux radio, automatiquement ou après actionnement d'un dispositif d'actionnement côté véhicule prévu à cet effet, des données qui comprennent une zone autour de la position actuelle du premier véhicule (2) qui doit être évitée par d'autres usagers de la route, de sorte que l'accès à la position actuelle dans laquelle se trouve le premier véhicule (2) impliqué dans un accident ou le premier véhicule (2) en panne ou se déplaçant lentement en raison d'une panne peut être maintenu libre ou rendu accessible aux forces d'intervention et de sauvetage, si le dispositif d'évaluation (6) a déterminé, sur la base de l'évaluation des données détectées par celui-ci, que le premier véhicule (2) a subi un accident ou qu'une panne est survenue sur le premier véhicule (2),
dans lequel le dispositif d'évaluation (6) a accès à des informations routières numériques et est configuré pour déterminer la taille de la zone autour de la position actuelle du premier véhicule (2) qui doit être évitée par d'autres usagers de la route, en tenant compte de la gravité de l'accident, du type de panne et/ou de la classe de danger du premier véhicule (2) ainsi qu'en tenant compte du type de route sur laquelle se trouve actuellement le premier véhicule (2) qui a subi un accident ou sur lequel une panne est survenue.

2. Système d'assistance (1) selon la revendication 1,
**caractérisé en ce**
**que** le dispositif d'évaluation (6) est configuré pour émettre les données de la zone autour de la position actuelle du premier véhicule (2) qui doit être évitée par d'autres usagers de la route,
- en utilisant une communication de véhicule à véhicule avec d'autres usagers de la route et/ou
- à un dispositif de traitement de données fixe (11) externe au véhicule, qui est configuré au moins pour fournir à des usagers de la route des données de trafic actuelles en ligne et/ou un calcul dynamique d'itinéraire de navigation.

3. Système d'assistance (1) selon la revendication 1 ou 2,
**caractérisé en ce**
**qu'**il présente un dispositif de caméra avec lequel l'environnement du premier véhicule (2) peut être détecté, et le dispositif d'évaluation (6) est configuré pour déterminer la taille de la zone autour de la position actuelle du premier véhicule (2) qui doit être évitée par d'autres usagers de la route, en tenant compte de la proportion de voies qui est bloquée par l'accident ou la panne du premier véhicule (2).

4. Système d'assistance (1) selon l'une quelconque des revendications précédentes, **caractérisé en ce**
**qu'**il est configuré pour émettre des données relatives à la position actuelle du premier véhicule (2), ainsi que des données relatives à un accident et/ou une panne ou un résultat d'évaluation du dispositif d'évaluation (6) à une centrale d'appel d'urgence fixe externe au véhicule, au moyen du dispositif de communication (7), si le dispositif d'évaluation (6) a déterminé, sur la base de l'évaluation des données détectées par celui-ci, que le premier véhicule (2) a subi un accident ou qu'une panne est survenue sur le premier véhicule.

5. Procédé de transmission de données relatives à un accident ou une panne d'un premier véhicule (2) du premier véhicule (2) à d'autres usagers de la route et/ou à un dispositif de traitement de données fixe externe au véhicule, comprenant les étapes suivantes consistant à :
- détecter des données relatives à un accident et/ou une panne à partir d'au moins un dispositif côté véhicule (4) à l'aide d'un dispositif de détection côté véhicule (3) ;
- déterminer la position actuelle du premier véhicule (2) à l'aide d'un dispositif de détermination de position côté véhicule (5) ;
- évaluer des données détectées par le dispositif de détection et de détermination de position à l'aide d'un dispositif d'évaluation côté véhicule (6) ; et
- émission automatique, ou après actionnement d'un dispositif d'actionnement côté véhicule prévu à cet effet, de données qui comprennent une zone autour de la position actuelle du premier véhicule (2) qui doit être évitée par d'autres usagers de la route, de sorte que l'accès à la position actuelle dans laquelle se trouve le premier véhicule (2) impliqué dans un accident ou le premier véhicule (2) en panne ou se déplaçant lentement en raison d'une panne peut être maintenu libre ou rendu accessible aux forces d'intervention et de sauvetage, à l'aide d'un dispositif de communication côté véhicule (7) à l'aide de signaux radio, si le dispositif d'évaluation (6) a déterminé, sur la base de l'évaluation des données détectées par celui-ci, que le premier véhicule (2) a subi un accident ou qu'une panne est survenue sur le premier véhicule (2),
- dans lequel le dispositif d'évaluation (6) accède à des informations routières numériques et détermine la taille de la zone autour de la position actuelle du premier véhicule (2) qui doit être évitée par d'autres usagers de la route, en tenant compte de la gravité de l'accident, du type de panne et/ou de la classe de danger du premier véhicule (2) ainsi que du type de route sur laquelle se trouve actuellement le premier véhicule (2) qui a subi un accident ou sur lequel une panne est survenue.

6. Procédé selon la revendication 5, comprenant en outre l'étape consistant à émettre des données relatives à la position actuelle du premier véhicule (2) ainsi que des données relatives à un accident et/ou une panne à partir d'au moins un dispositif côté véhicule (4) ou d'un résultat d'évaluation du dispositif d'évaluation côté véhicule (6) au moyen du dispositif de communication côté véhicule (7) à l'aide de signaux radio à une centrale d'appel d'urgence fixe externe au véhicule, si le dispositif d'évaluation a déterminé, sur la base de l'évaluation des données détectées par celui-ci, que le premier véhicule (2) a subi un accident ou qu'une panne est survenue sur le premier véhicule (2).
